# EUROPEAN PATENT APPLICATION

(11) **EP 3 916 575 A2**
(43) Date of publication of application: **01.12.2021**
(21) Application number: 21198328.3
(22) Date of filing: 22.09.2021
(51) Int. Cl.: G06F 16/215, G06F 16/29

(54) **METHOD AND APPARATUS FOR ASSISTING QUALITY INSPECTION OF MAP DATA, ELECTRONIC DEVICE, AND STORAGE MEDIUM**

(30) Priority: 24.09.2020 CN 202011019333
(71) Applicant: Beijing Baidu Netcom Science and Technology Co., Ltd., Beijing 100085 (CN)
(72) Inventor: ZHU, Jingsi, Beijing, 100085 (CN); DENG, Guochuan, Beijing, 100085 (CN); ZHAO, Taotao, Beijing, 100085 (CN); KANG, Qingyu, Beijing, 100085 (CN); NIU, Yingjie, Beijing, 100085 (CN); WANG, Meng, Beijing, 100085 (CN)
(74) Representative: advotec.

(57) **Abstract**

The disclosure discloses a method and an apparatus for assisting quality inspection of map data, an electronic device, and a storage medium. The detailed implementation includes: obtaining (110) at least one piece of map query data matching an area to be inspected; obtaining (120) a first map image matching each piece of map query data by a first map client and obtaining a second map image matching each piece of map query data by a second map client, the first map client being adapted with map data to be online, and the second map client being adapted with online map data; and generating (130) at least one pair of contrast images for quality inspection based on the first map image and the second map image, in which each pair of contrast images includes map images determined by the first map client and the second map client for the same map query data.

## Description

### FIELD

The disclosure relates to a field of electronic map processing technologies and particularly to a field of electronic map, image processing and cloud computing technologies, and particularly relates to a method and an apparatus for assisting quality inspection of map data, an electronic device, and a storage medium.

### BACKGROUND

With development of electronic technologies and communication technologies, applications of an electronic map in daily life becomes more and more popular. The electronic map is used to provide a navigation service for people, which requires accurate map data, otherwise it may bring inconvenience and even harm to users.

Generally, quality inspection of the electronic map is to manually compare displayed maps to find out whether there is any abnormality. However, an update speed of the electronic map is fast, and the method for manually quality inspection requires more time and energy, which is inefficient, incomplete and costly.

### SUMMARY

The disclosure provides a method and an apparatus for assisting quality inspection of map data, an electronic device, and a storage medium.

According to a first aspect of the disclosure, a method for assisting quality inspection of map data is provided, and executed by a server. The method includes: obtaining at least one piece of map query data matching an area to be inspected; obtaining a first map image matching each piece of map query data by a first map client and obtaining a second map image matching each piece of map query data by a second map client, the first map client being adapted with map data to be online, and the second map client being adapted with online map data; and generating at least one pair of contrast images for quality inspection based on the first map image and the second map image, in which each pair of contrast images includes map images determined by the first map client and the second map client for the same map query data.

According to a second aspect of the disclosure, a method for assisting quality inspection of map data is provided, and executed by a first map client or a second map client. The method includes: receiving at least one piece of map query data corresponding to an area to be inspected and sent by a server; obtaining map display results by rendering pieces of map query data respectively based on adapted map data; and performing screenshot on each map display result, obtaining a map image corresponding to each piece of map query data, and sending each map image to the server; in which, the first map client is adapted with map data to be online, and the second map client is adapted with online map data.

According to a third aspect of the disclosure, an apparatus for assisting quality inspection of map data is provided, and provided in a server. The apparatus includes: a first obtaining module, a second obtaining module, and a generating module. The first obtaining module is configured to obtain at least one piece of map query data matching an area to be inspected. The second obtaining module is configured to obtain a first map image matching each piece of map query data by a first map client and obtain a second map image matching each piece of map query data by a second map client, the first map client being adapted with map data to be online, and the second map client being adapted with online map data. The generating module is configured to generate at least one pair of contrast images for quality inspection based on the first map image and the second map image, in which each pair of contrast images includes map images determined by the first map client and the second map client for the same map query data.

According to a fourth aspect of the disclosure, an apparatus for assisting quality inspection of map data is provided, and provided in a first map client or a second map client. The apparatus includes: a receiving module, a third obtaining module, and a fourth obtaining module. The receiving module is configured to receive at least one piece of map query data corresponding to an area to be inspected and sent by a server. The third obtaining module is configured to obtain map display results by rendering pieces of map query data respectively based on adapted map data. The fourth obtaining module is configured to perform screenshot on each map display result, obtain a map image corresponding to each piece of map query data, and send each map image to the server. The first map client is adapted with map data to be online, and the second map client is adapted with online map data.

According to a fifth aspect of the disclosure, an electronic device is provided. The electronic device includes: at least one processor and a memory. The memory is communicatively coupled to the at least one processor. The memory is configured to store instructions executable by the at least one processor. The at least one processor is caused to implement the method according to any of embodiments of the disclosure when the instructions are executed by the at least one processor.

According to a sixth aspect of the disclosure, a non-transitory computer readable storage medium having computer instructions stored thereon is provided. The computer instructions are configured to cause a computer to execute the method according to any of embodiments of the disclosure.

According to a seventh aspect of the disclosure, a computer program product containing computer instructions is provided. When the computer instructions are executed, the instructions are caused to implement the method according to any of embodiments of the disclosure.

With the technical solution of the disclosure, a quality inspection problem of the map data is solved, comprehensiveness and efficiency of the quality inspection of the map data are improved, and cost is saved.

It should be understood that, the contents described in the Summary are not intended to identify key or important features of embodiments of the disclosure, nor is it intended to limit the scope of the disclosure. Other features of the disclosure will become apparent from the following description.

### BRIEF DESCRIPTION OF THE DRAWINGS

The accompanying drawings are used for better understanding the solution and do not constitute a limitation of the disclosure.
FIG. 1 is a flow chart illustrating a method for assisting quality inspection of map data according to an embodiment of the disclosure.
FIG. 2 is a flow chart illustrating a method for assisting quality inspection of map data according to another embodiment of the disclosure.
FIG. 3 is a flow chart illustrating a method for assisting quality inspection of map data according to still another embodiment of the disclosure.
FIG. 4 is a flow chart illustrating a method for assisting quality inspection of map data according to yet another embodiment of the disclosure.
FIG. 5 is a block diagram illustrating an apparatus for assisting quality inspection of map data according to an embodiment of the disclosure.
FIG. 6 is a block diagram illustrating an apparatus for assisting quality inspection of map data according to another embodiment of the disclosure.
FIG. 7 is a block diagram illustrating an electronic device capable of implementing a method for assisting quality inspection of map data according to embodiments of the disclosure.

### DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

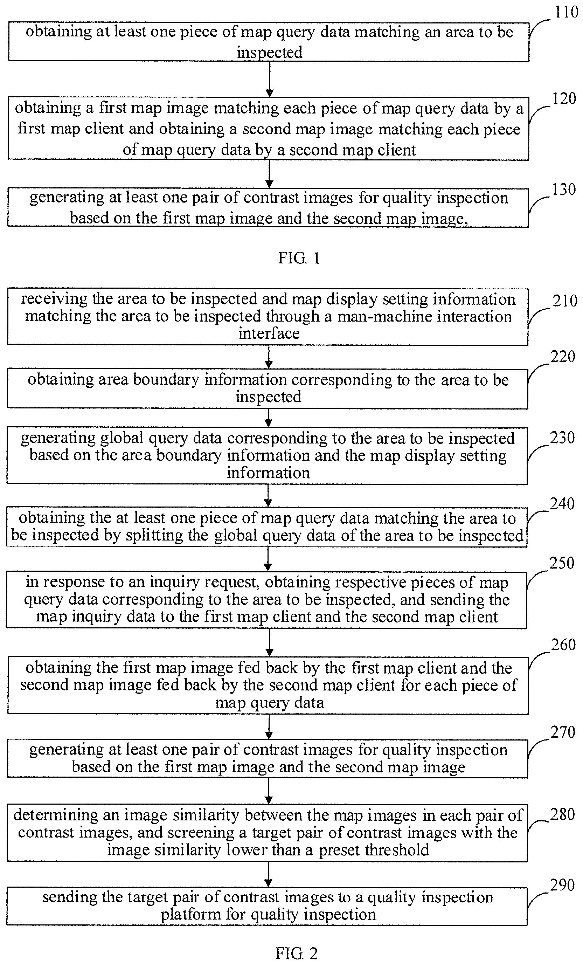

FIG. 1 is a flow chart illustrating a method for assisting quality inspection of map data according to an embodiment of the disclosure. The embodiment is applicable for a condition where quality inspection control is performed on electronic map data. The method may be implemented by an apparatus for assisting quality inspection of map data. The apparatus may be implemented by software and/or hardware and integrated in an electronic device such as a server. In detail, referring to FIG. 1, the method includes the following.

At block 110, at least one piece of map query data matching an area to be inspected is obtained.

The area to be inspected may be an area where map data to be inspected belongs. The area to be inspected may be an area where map data to be online this time is located, or some areas with high hot (such as, expressways or overpasses).

The area to be inspected may be divided into one or more layers. Exemplarily, the area to be inspected may be a list of various cities, such as Beijing, Tianjin or Harbin. Or, the area to be inspected may also be a list of countries. A country may also be divided into a list of provinces. Each province may also be divided into a list of cities. Each city may also be subdivided. For example, the area to be inspected may be expressed as an XX county. The area to be inspected may be expressed as an XX area of an XX country, an XX province, an XX city, etc.

The map query data may correspond to the area to be inspected. A form of the map query data may be a map data set. The map query data may include information of a variety of objects in the area to be inspected. For example, the map query data may include road information, bridge information, residential area information, school area information and bus stop information, etc. The map query data may be specifically represented by latitude and longitude information. For example, the map query data may include a map data set formed by latitude and longitude information of contained object information. The map query data may be in the form of JSON (JavaScript Object Notation), which is simple and clear in a hierarchical structure, easy to read and write, easy to analyze and generate by a machine, and may effectively improve the efficiency of network transmission.

The area to be inspected may be input by a quality inspector or a quality inspection task dispatcher through a man-machine interaction interface, or may be determined by the server from a list such as the list of cities based on a polling manner. The server may obtain one or more pieces of map query data matching the area to be inspected from a storage space based on the determined area to be inspected. The map query data may be divided based on various reasons. For example, the map query data may be divided based on an area of lower level in the area to be inspected, or divided based on difference between types of object information, or divided by a combination of various ways.

At block 120, a first map image matching each piece of map query data by a first map client and a second map image matching each piece of map query data by a second map client are obtained.

The first map client is adapted with map data to be online, and the second map client is adapted with online map data. The on-line map data is the map data used currently, namely, the map data that is already online. The map data to be online is the latest collected map data. The map data to be online may be used online to update the online map data after the quality inspection of the map data to be online passes. The map data is data for rendering and forming the map image, and may include position information, size information, shape information, color information, and the like. Respective pieces of map data matching the area to be inspected may be screened out from all the pieces of map data based on each piece of map query data, and then one or more map images matching the area to be inspected may be obtained by rendering based on the screened map data.

In order to provide the user with better map services, a speed for online updating of the map data of an electronic map is constantly increasing. For example, the speed for online updating of the map data is currently at a rate of days. The map data requires to perform quality inspection before updating to be online, and the quality inspection of the map data may be to compare the map data to be online with the online map data. By comparing the map data to be online with the online map data, it may be determined whether the map data to be online has any blank display, whether the display effect is abnormal, and the like.

The first map client and the second map client may be Apps (applications) installed on mobile terminals such as mobile phones and tablets, or may be virtual clients installed on servers. The first map client may display the map data to be online corresponding to the map query data. The second map client may display the online map data corresponding to the map query data.

It should be noted that, the display mentioned here may mean actual display on a display screen of the mobile terminal, or virtual display on a memory canvas in the server, which will not be limited here.

For one piece of map query data, the first map client and the second map client may each generate one map image, for example, the image is generated by rendering the map data.

The server may obtain the map images displayed on the terminals where the first map client and the second map client are located through a camera device, or the first map client and the second map client may take screenshots of the displayed map images and upload the screenshots to the server.

By generating the map image corresponding to the map query data, the quality inspection is performed on the map data to be online, without manual operations to find the map data representing the same area between the map data to be online and the online map data. Comprehensive quality inspection may be performed on the area to be inspected without consuming too much manpower, thereby realizing the quality inspection with low cost and high efficiency.

At block 130, at least one pair of contrast images for quality inspection is generated based on the first map image and the second map image.

Each pair of contrast images includes map images determined by the first map client and the second map client for the same map query data.

The pair of contrast images may be an image group for comparing the map data to be online with the online map data already. A pair of contrast images may include the map image generated by the first map client and the map image generated by the second map client. The pair of contrast images may be generated for one piece of map query data. The pair of contrast images may have a number, and the number may reflect information such as the areas to be inspected, the map query data and the clients. For example, a number of one map image in the pair of comparison images is represented by BJ001-1, which indicates that the area to be inspected is Beijing (BJ), the map query data is the 001st map data set (001), and the map image is generated by the first map client (-1) for the map data to be online.

With the technical solution of embodiments of the disclosure, the least one piece of map query data matching the area to be inspected is obtained, the first map image matching each piece of map query data by the first map client and the second map image matching each piece of map query data by the second map client are obtained, and the at least one pair of contrast images for quality inspection is generated based on the first map image and the second map image. Each pair of contrast images includes the map images determined by the first map client and the second map client for the same map query data. In this way, a problem of assisting quality inspection of the map data is solved, the comprehensiveness and efficiency of quality inspection of the map data may be improved, and manpower, time and cost may be saved.

On the basis of the above implementation, in some embodiments, after the at least one pair of contrast images for quality inspection is generated based on the first map image and the second map image, the method may also include: determining an image similarity between the map images in each pair of contrast images, and screening a target pair of contrast images with the image similarity lower than a preset threshold; and sending the target pair of contrast images to a quality inspection platform for quality inspection.

The image similarity may represent a difference between two map images. The smaller the difference, the greater the image similarity is. The image similarity of the two map images may be recognized by an image recognition algorithm. Or, an image comparison model may be pre-trained, based on pairs of contrast image samples, by a deep learning algorithm to obtain a trained image comparison model, and the pair of contrast images are inputted into the trained image comparison model to obtain the image similarity. When the image similarity is 100%, it means that the two map images in the pair of contrast images are completely consistent, and there is no abnormality in the map data to be online, and the quality inspection ends.

However, in one aspect, in practice, even if the two map images display the same content, but may not have a 100% image similarity due to slight differences in brightness, contrast or structures. Therefore, in the disclosure, the preset threshold may be set to a value close to 100%. In the other aspect, because the two map images in the pair of contrast images are generated for the same map query data, and an update interval between the map data to be online and the online map data is very short, there is no obvious difference between the map data to be online and the online map data. Thus, the image similarity is generally not too low. The preset threshold may be set greater in order to ensure no missing inspection. For example, the preset threshold may be a value ranging from 98% to 100%.

The server may take the pair of contrast images corresponding to the image similarity lower than the preset threshold as the target pair of contrast images, and send the target pair of contrast images to the quality inspection platform for quality inspection. The comprehensive quality inspection may be performed on the area to be inspected, and the pair of contrast images without requiring for quality inspection may be screened at the same time. In this way, workloads of the quality inspection may be reduced, and a speed of quality inspection is improved. Moreover, an omission may be avoided, quality of the quality inspection is improved, manpower consumption and cost consumption may be reduced, and the quality inspection may be quantified.

In another alternative implementation of embodiments, after the target pair of contrast images with the image similarity lower than the preset threshold is screened, areas with differences between two map images may be further marked in respective map images in the target pair of contrast images, for example, marked by a rectangle. Through the above settings, the workload of the quality inspection of the quality inspection platform may be further simplified, and only the areas marked by the rectangle may be compared.

In detail, a way for marking the areas with the difference may include: sliding a sliding window in the two map images to obtain multiple local comparison images, the sliding window being set as a preset size, and obtaining a sliding window position corresponding to the local comparison image with the image similarity lower than the preset threshold value for marking.

FIG. 2 is a flow chart illustrating a method for assisting quality inspection of map data according to another embodiment of the disclosure. This embodiment is further refined on the above technical solution. The technical solution in this embodiment may be combined with one or more of the above embodiments. In detail, referring to FIG. 2, the method includes the following.

At block 210, the area to be inspected and map display setting information matching the area to be inspected are received through a man-machine interaction interface.

A quality inspector may input the area to be inspected through the man-machine interaction interface. There may be various manners for inputting the area to be inspected. For example, the area to be inspected may be inputted through the man-machine interaction interface of a terminal device which may communicate with the server, and then sent to the server. The area to be inspected may be directly inputted through the man-machine interaction interface provided on the server.

When the area to be inspected is inputted, the map display setting information matching the area to be inspected may be also inputted together. Or when the server receives the area to be inspected, the server may retrieve preset map display setting information matching the area to be inspected from the memory. The server may receive an update situation of the map display setting information matching the area to be inspected through the man-machine interaction interface. Therefore, the server may employ the updated map display setting information when there is an update, and employ the map display setting information obtained from the memory when there is no update.

The map display setting information may be setting information for displaying the map data on the first map client or the second map client. In order to facilitate the comparison of subsequently map images, the map display setting information of the first map client may be the same as that of the second map client. The map display setting information may include a display form (such as, two or more dimensions), a display color, a display scale (e.g., a ratio of an actual map to a display map), a display line type, and the like. The area to be inspected and the map display setting information are may be received through the man-machine interaction interface, which may facilitate scheduling the area to be inspected and setting the map display setting information.

At block 220, area boundary information corresponding to the area to be inspected is obtained.

The area boundary information may refer to boundary line information corresponding to the area to be inspected. In detail, the area boundary information may be composed of latitude and longitude data sets. There may be one or more pieces of area boundary information. For example, the area boundary information may be outermost boundary information of the area to be inspected, or the area boundary information may be boundary information of one or more sub-areas within the area to be inspected. Exemplarily, the area to be inspected is Beijing, and the area boundary information may be boundary line information of Beijing. Alternatively, the area boundary information may be boundary line information of respective districts (such as Haidian District) in Beijing.

At block 230, global query data corresponding to the area to be inspected is generated based on the area boundary information and the map display setting information.

The global query data may refer to a combination of a set of geographic location coordinates and the map display setting information. The set of geographic location coordinates may be a set of geographic location coordinates (typically, latitude and longitude coordinates) of respective map points matching the area to be inspected.

Each map data point in the map data is associated with one geographic location coordinate. After the global query data is sent to the map client, the map client may further screen out the map data matching the map query data for map display, and then implement the map display for the whole area to be inspected.

In this embodiment, the set of geographical location coordinates of respective map points matching the area boundary information is generated according to the area boundary information and a preset distribution density of the geographical location coordinates.

At block 240, the at least one piece of map query data matching the area to be inspected is obtained by splitting the global query data of the area to be inspected.

The splitting may refer to dividing the global query data into one or more pieces of map query data. The longitude and latitude information and display data of all objects in one split area corresponding to the map query data in the area to be inspected may be determined based on one piece of map query data. There may be various splitting manners, for example, the splitting may be performed based on existing map data splitting technologies, such as, splitting a plane or a curved surface by points, splitting the plane or the curved surface by a line, and splitting planes or curved surfaces by the plane or curved surface. The splitting may be performed based on the area boundary information of each sub-area of the area to be inspected, or based on a single-screen display area of the first map client or the second map client. By splitting the global query data, it may be facilitated to perform the comprehensive quality inspection on the area to be inspected and without omission. The area to be inspected may be displayed clearly, thereby facilitating to find abnormities.

In order to facilitate the splitting and subsequently generation and comparison of the map images, in an implementation of the disclosure, in some embodiments, splitting the global query data of the area to be inspected includes: obtaining single-screen display areas of the first map client and the second map client based on the map display setting information; and splitting the global map query data based on sizes of the single-screen display areas and the area to be inspected.

The single-screen display areas may represent a size range of the areas that may be displayed on the display screens of the first map client and the second map client. The screen of the first map client may have a same display size (e.g., length and width) as that of the second map client. The size range of the area that may be displayed on the display screens of the first map client and the second map client, namely, the single-screen display area, may be determined based on a display size and a display scale in the map display setting information.

Exemplarily, a length of a circumscribed rectangle of the area to be inspected is 2000 meters and the width is 1500 meters. The display scale is 500:1, and the display map corresponding to the circumscribed rectangle is a rectangle with 4 meters in length and 3 meters in width. The display size of the display screen is 50 cm in length and 30 cm in width, and the single-screen display area may display a display map with 50 cm in length and 30 cm in width, which corresponds to an actual map with 250 meters in length and 150 meters in width.

The display map may refer to the map displayed through the display screen after an actual map is reduced according to the display scale.

The global map query data may be split based on the sizes of the single-screen display area (the actual map corresponding to this area) and the area to be inspected. For example, the size of the area to be inspected (which may be determined by the circumscribed rectangle) is 2000 meters in length and 1500 meters in width. The actual map corresponding to the single-screen display area is 250 meters in length and 150 meters in width. The length of the area to be inspected may be divided into 2000÷250=8 equal parts and the width may be divided into 1500÷150=10 equal parts. An area formed by each equal part of length and each equal part of width is one splitting sub-area, and there are 8×10=80 splitting sub-areas. Longitude and latitude sets and display data of all objects in the area corresponding to each splitting sub-area may constitute the map query data. The global query data is split based on the single-screen display area, which may facilitate for the map clients to display the map data, to perform the comprehensive quality inspection on the area to be inspected, and to avoid the omission.

At block 250, in response to an inquiry request, respective pieces of map query data corresponding to the area to be inspected is obtained, and the map inquiry data is sent to the first map client and the second map client.

The first map client is adapted with the map data to be online, and the second map client is adapted with the online map data.

The inquiry request may be in form of a heartbeat packet, and may be initiated by the first map client or the second map client to the server. For example, the inquiry request may be initiated every 30 seconds. The map query data may be relative to each splitting sub-area. For the first map client, the map query data may be the latitude and longitude set and the display data (the set composed of the latitude and longitude coordinates and the map display setting information) in the map data to be online of all objects in a certain splitting sub-area. For the second map client, the map query data may be a longitude and latitude set and display data in online map data of all objects in a certain splitting sub-area. In other words, the splitting sub-area received by the first map client is the same as that received by the second map client, but difference may exist in detailed data (caused by the difference between the map data to be online and the online map data).

At block 260, the first map image fed back by the first map client and the second map image fed back by the second map client are obtained respectively for each piece of map query data.

The first map client may display and generate the first map image based on the received map query data (including the latitude and longitude set and the display data), and feed the first map image back to the server. The second map client may display and generate the second map image based on the received map query data (including the latitude and longitude set and the display data), and feed the second map image back to the server. Through the map images, it is facilitated to intuitively detect the area to be inspected.

At block 270, at least one pair of contrast images for quality inspection is generated based on the first map image and the second map image.

Each pair of contrast images includes map images determined by the first map client and the second map client for the same map query data.

At block 280, an image similarity between the map images in each pair of contrast images is determined, and a target pair of contrast images with the image similarity lower than a preset threshold is screened.

At block 290, the target pair of contrast images is sent to a quality inspection platform for quality inspection.

With the technical solution of embodiments of the disclosure, the area to be inspected and the map display setting information matching the area to be inspected are received through the man-machine interaction interface. The area boundary information corresponding to the area to be inspected is obtained. The global query data corresponding to the area to be inspected is generated based on the area boundary information and the map display setting information. The at least one piece of map query data matching the area to be inspected is obtained by splitting the global query data of the area to be inspected. In response to the inquiry request, respective pieces of map query data corresponding to the area to be inspected are obtained, and the map inquiry data is sent to the first map client and the second map client. The first map image fed back by the first map client and the second map image fed back by the second map client are obtained respectively for each piece of map query data. The at least one pair of contrast images for quality inspection is generated based on the first map image and the second map image. The image similarity between the map images in each pair of contrast images is determined, and the target pair of contrast images with the image similarity lower than the preset threshold is screened. The target pair of contrast images is sent to the quality inspection platform for quality inspection. In this way, a problem of assisting quality inspection of the map data is solved, and the comprehensive quality inspection on the area to be inspected is implemented by splitting the global query data. The efficiency of the quality inspection may be improved through the cooperation between the server and the clients. The quality inspection work may be reduced by screening the pair of contrast images by the image similarity, and manpower, time and cost may be saved.

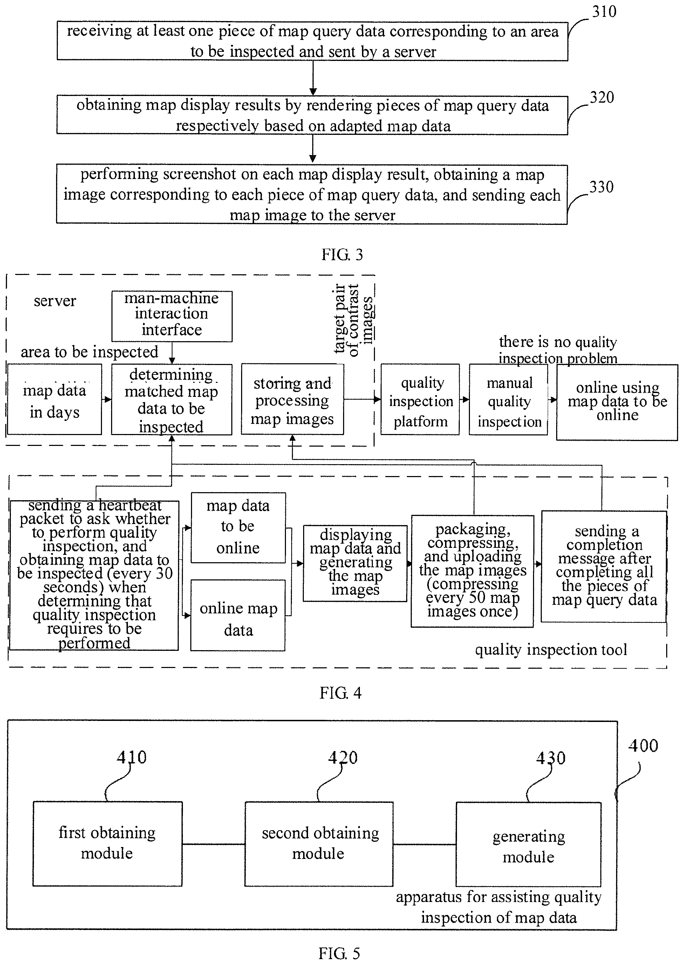

FIG. 3 is a flow chart illustrating a method for assisting quality inspection of map data according to still another embodiment of the disclosure. This embodiment is applicable for a condition where inspection control is performed on electronic map data. The method may be implemented by an apparatus for assisting quality inspection of map data. The apparatus may be implemented by software and/or hardware and integrated in a client of an electronic device such as a mobile phone or a computer. In detail, referring to FIG. 3, the method includes the following.

At block 310, at least one piece of map query data corresponding to an area to be inspected and sent by a server is received.

The first map client or the second map client may receive the map query data corresponding to the area to be inspected through a communication receiving device. The first map client is adapted with map data to be online, and the second map client is adapted with online map data.

At block 320, map display results are obtained by rendering pieces of map query data respectively based on adapted map data.

The first map client or the second map client may render an object represented by a latitude and longitude set in each piece of map query data based on the display data, display the object based on the map display setting information, and determine the map display result corresponding to the map query data.

At block 330, screenshot is performed on each map display result, a map image corresponding to each piece of map query data is obtained, and each map image is sent to the server.

The map display result may be a display picture of the map data. The first map client or the second map client may start a screenshot function. Each time the display picture corresponding to one piece of map query data is displayed, the screenshot may be started one or more times. The number of times of starting the screenshot by the first map client is the same as that by the second map client for the same piece of map query data (for example, both map clients start the screenshot once), which may ensure a correspondence between the map images and be facilitate for the server to generate the pair of contrast images.

Each of the first map client and the second map client each may send the map image to the server each time obtaining one map image when sending the map image to the server. However, considering a transmission delay and a packet loss rate, the real-time transmission delay is low, and a packet loss problem may be serious. Therefore, in embodiments of the disclosure, the first map client and the second map client may employ a way of packaging and uploading when sending the map images to the server. Exemplarily, every 50 map images are obtained, the 50 map images are packaged and uploaded to the server once, which may ensure better delay and lower packet loss.

On the basis of the above implementation, in some embodiments, the first map client and the second map client may send a processing completion response to the server after completing processing of all the pieces of map query data. The server may process the map image based on the processing completion response, generate a pair of contrast images, screen out a target pair of contrast images based on the image similarity, and send the target pair of contrast images to a quality inspection platform for quality inspection.

With the technical solution of embodiments of the disclosure, the at least one piece of map query data corresponding to the area to be inspected and sent by the server is received. The map display results are obtained by rendering the pieces of map query data respectively based on the adapted map data. The screenshot is performed on each map display result, the map image corresponding to each piece of map query data is obtained, and each map image is sent to the server. In this way, a problem of assisting quality inspection of the map data is solved, thereby implementing that the map image may be determined based on the map query data of the area to be inspected and determining the map data of the same area without manual operation, which will facilitate to quality inspection and perform comprehensive quality inspection on the area to be inspected.

FIG. 4 is a flow chart illustrating a method for assisting quality inspection of map data according to yet another embodiment of the disclosure.

As illustrated in FIG. 4, a server (such as a quality inspection server) may receive map data in days provided by an image service device. An area to be inspected may be selected from a list of quality inspection cities by a quality inspection personnel or a quality inspection manager through a man-machine interaction interface. The server may receive the area to be inspected and determine matched map data to be inspected. The map data to be inspected may include map data to be online and online map data. The map data to be online may be obtained from the map data in days provided by the image service device based on the area to be inspected. The online map data may be currently displaying map data corresponding to the area to be inspected, which is pre-stored by the server or obtained from a map display device (such as a map APP).

Each quality inspection tool (the first map client and the second map client) may send a request in form of a heartbeat packet to the server every 30 seconds for asking whether to perform quality inspection, and obtain the map data to be online and the online map data of the area to be inspected corresponding to the map data to be online. The quality inspection tool may render the map data to be online and the online map data based on map display setting information provided by the server to obtain map display results, and perform screenshot to generate the map images. The quality inspection tool may package the map images, such as package every 50 map images once, compress the map images (such as employing a zip compression), and send the compressed map images to the server. The quality inspection tool may send a completion message to the server after completing the above operation performed on all the pieces of map query data in the area to be inspected.

The server may store and process the map images, for example, generate the pair of contrast images, and screen out the target pair of contrast images based on the image similarity. The server may send the target pair of contrast images to the quality inspection platform, and further perform quality inspection on the target pair of contrast images manually to ensure quality of the quality inspection. When there is no problem in quality inspection, the map data to be online may be used online. Thus, sampling inspection in the related arts may be upgraded to the comprehensive quality inspection, the workload of manual quality inspection which may be reduced, heavy work, high cost and easy omission in manual quality inspection may be avoided, and efficiency of quality inspection may be improved. Inspecting a city requires at least one hour in the related arts, while inspecting the city merely requires at most half an hour by employing the technical solution of embodiments of the disclosure.

FIG. 5 is a block diagram illustrating an apparatus for assisting quality inspection of map data according to an embodiment of the disclosure. The apparatus 400 for assisting quality inspection of map data may be provided in an electronic device such as a server. In detail, as illustrated in FIG. 5, the apparatus includes: a first obtaining module 410, a second obtaining module 420, and a generating module 430.

The first obtaining module 410 is configured to obtain at least one piece of map query data matching an area to be inspected.

The second obtaining module 420 is configured to obtain a first map image matching each piece of map query data by a first map client and obtain a second map image matching each piece of map query data by a second map client. The first map client is adapted with map data to be online, and the second map client is adapted with online map data.

The generating module 430 is configured to generate at least one pair of contrast images for quality inspection based on the first map image and the second map image.

Each pair of contrast images includes map images determined by the first map client and the second map client for the same map query data.

In some embodiments, the apparatus also includes: an information receiving module, configured to receive the area to be inspected and map display setting information matching the area to be inspected through a man-machine interaction interface before the at least one piece of map query data matching the area to be inspected is obtained.

In some embodiments, the first obtaining module includes: a first obtaining unit, a second obtaining unit, and a third obtaining unit. The first obtaining unit is configured to obtain area boundary information corresponding to the area to be inspected. The second obtaining unit is configured to generate global query data corresponding to the area to be inspected based on the area boundary information and the map display setting information. The third obtaining unit is configured to obtain the at least one piece of map query data matching the area to be inspected by splitting the global query data of the area to be inspected.

In some embodiments, the third obtaining unit includes: an obtaining sub-unit, and a splitting sub-unit. The obtaining sub-unit is configured to obtain single-screen display areas of the first map client and the second map client based on the map display setting information. The splitting sub-unit is configured to split the global map query data based on sizes of the single-screen display areas and the area to be inspected.

In some embodiments, the second obtaining module includes: a fourth obtaining unit, and a fifth obtaining unit. The fourth obtaining unit is configured to, in response to an inquiry request, obtain respective pieces of map query data corresponding to the area to be inspected, and to send the map inquiry data to the first map client and the second map client. The fifth obtaining unit is configured to obtain the first map image fed back by the first map client and the second map image fed back by the second map client for each piece of map query data.

In some embodiments, the apparatus also includes: a screening module, and a sending module. The screening module is configured to determine an image similarity between the map images in each pair of contrast images, and to screen a target pair of contrast images with the image similarity lower than a preset threshold after generating the at least one pair of contrast images for quality inspection based on the first map image and the second map image. The sending module is configured to send the target pair of contrast images to a quality inspection platform for quality inspection.

The apparatus for assisting the quality inspection of map data according to embodiments of the disclosure may execute the method for assisting the quality inspection of map data according to any of embodiments of the disclosure, and has corresponding functional modules and beneficial effects of the method.

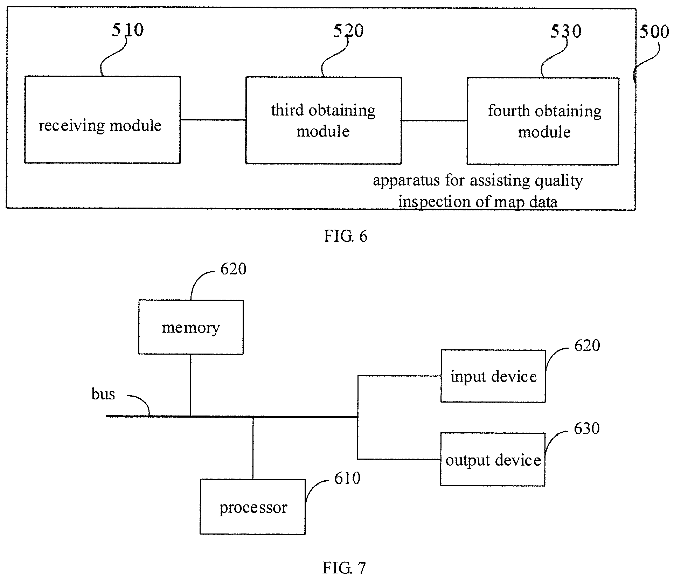

FIG. 6 is a block diagram illustrating an apparatus for assisting quality inspection of map data according to another embodiment of the disclosure. The apparatus 500 for assisting the quality inspection of map data may be provided in an electronic device such as a mobile phone or a computer. In detail, as illustrated in FIG. 6, the apparatus includes: a receiving module 510, a third obtaining module 520, and a fourth obtaining module 530.

The receiving module 510 is configured to receive at least one piece of map query data corresponding to an area to be inspected and sent by a server. The third obtaining module 520 is configured to obtain map display results by rendering pieces of map query data respectively based on adapted map data. The fourth obtaining module 530 is configured to: perform screenshot on each map display result, obtain a map image corresponding to each piece of map query data, and send each map image to the server.

The first map client is adapted with map data to be online, and the second map client is adapted with online map data.

The apparatus for assisting the quality inspection of map data according to embodiments of the disclosure may execute the method for assisting the quality inspection of map data according to any of embodiments of the disclosure, and has corresponding functional modules and beneficial effects of the method.

According to embodiments of the disclosure, the disclosure also provides an electronic device and a readable storage medium.

According to embodiments of the disclosure, the disclosure also provides a computer program product containing computer instructions. When the computer instructions are executed, the instructions are caused to implement the method of the above embodiments of the disclosure.

As illustrated in FIG. 7, FIG. 7 is a block diagram illustrating an electronic device capable of implementing a method for assisting quality inspection of map data according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 7, the electronic device includes: one or more processors 610, a memory 620, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 7, a processor 610 is taken as an example.

The memory 620 is a non-transitory computer readable storage medium provided by the disclosure. The memory is configured to store instructions executable by at least one processor, to enable the at least one processor to execute the method for assisting the quality inspection of map data provided by the disclosure. The non-transitory computer readable storage medium provided by the disclosure is configured to store computer instructions. The computer instructions are configured to enable a computer to execute the method for assisting the quality inspection of map data provided by the disclosure.

As the non-transitory computer readable storage medium, the memory 620 may be configured to store non-transitory software programs, non-transitory computer executable programs and modules, such as program instructions/module (such as the first obtaining module 410, the second obtaining module 420, and the generating module 430 illustrated in FIG. 5, or the receiving module 510, the third obtaining module 520, and the fourth obtaining module 530 illustrated in FIG. 6) corresponding to the method for assisting the quality inspection of map data according to embodiments of the disclosure. The processor 610 is configured to execute various functional applications and data processing of the server by operating non-transitory software programs, instructions and modules stored in the memory 620, that is, implements the method for assisting the quality inspection of map data according to the above method embodiments.

The memory 620 may include a storage program region and a storage data region. The storage program region may store an application required by an operating system and at least one function. The storage data region may store data created according to predicted usage of the electronic device capable of implementing the method for assisting the quality inspection of map data. In addition, the memory 620 may include a high-speed random access memory, and may also include a non-transitory memory, such as at least one disk memory device, a flash memory device, or other non-transitory solid-state memory device. In some embodiments, the memory 620 may optionally include memories remotely located to the processor 610, and these remote memories may be connected to the electronic device for assisting the quality inspection of map data via a network. Examples of the above network include, but are not limited to, an Internet, an intranet, a local area network, a mobile communication network and combinations thereof.

The electronic device capable of implementing the method for assisting the quality inspection of map data may also include: an input device 630 and an output device 640. The processor 610, the memory 620, the input device 630, and the output device 640 may be connected via a bus or in other means. In FIG. 7, the bus is taken as an example.

The input device 630 may receive inputted digital or character information, and generate key signal input related to user setting and function control of the electronic device for assisting the quality inspection of map data, such as a touch screen, a keypad, a mouse, a track pad, a touch pad, an indicator stick, one or more mouse buttons, a trackball, a joystick and other input device. The output device 640 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other. The server may be a cloud server, also known as cloud computing server or a cloud host, which is a host product in a cloud computing service system, to solve the defects of difficult management and weak business scalability in a traditional physical host and a VPS service.

According to the technical solution of embodiments of the disclosure, at least one piece of map query data matching an area to be inspected is obtained. A first map image matching each piece of map query data by a first map client and a second map image matching each piece of map query data by a second map client are obtained. At least one pair of contrast images for quality inspection is generated based on the first map image and the second map image. Each pair of contrast images includes map images determined by the first map client and the second map client for the same map query data. In this way, an auxiliary quality inspection problem of map data is solved, the comprehensiveness and efficiency of quality inspection of the map data is improved, and manpower, time and cost are saved.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, sub-combinations and substitutions may be made based on design requirements and other factors. Any modification, equivalent substitution and improvement made within the spirit and the principle of the disclosure shall be included in the protection scope of disclosure.

## Claims

1. A method for assisting quality inspection of map data, executed by a server, and comprising:
obtaining (110) at least one piece of map query data matching an area to be inspected;
obtaining (120) a first map image matching each piece of map query data by a first map client and obtaining a second map image matching each piece of map query data by a second map client, the first map client being adapted with map data to be online, and the second map client being adapted with online map data; and
generating (130) at least one pair of contrast images for quality inspection based on the first map image and the second map image, wherein each pair of contrast images comprises map images determined by the first map client and the second map client for the same map query data.

2. The method of claim 1, before obtaining (110) the at least one piece of map query data matching the area to be inspected, further comprising:
receiving (210) the area to be inspected and map display setting information matching the area to be inspected through a man-machine interaction interface.

3. The method of claim 2, wherein obtaining (110) the at least one piece of map query data matching the area to be inspected comprises:
obtaining (220) area boundary information corresponding to the area to be inspected;
generating (230) global query data corresponding to the area to be inspected based on the area boundary information and the map display setting information; and
obtaining (240) the at least one piece of map query data matching the area to be inspected by splitting the global query data of the area to be inspected.

4. The method of claim 3, wherein splitting (240) the global query data of the area to be inspected comprises:
obtaining single-screen display areas of the first map client and the second map client based on the map display setting information; and
splitting the global map query data based on sizes of the single-screen display areas and the area to be inspected.

5. The method of any of claims 1-4, wherein obtaining (120) a first map image matching each piece of map query data by a first map client and obtaining a second map image matching each piece of map query data by a second map client comprises:
in (250) response to an inquiry request, obtaining respective pieces of map query data corresponding to the area to be inspected, and sending the map inquiry data to the first map client and the second map client; and
obtaining (260) the first map image fed back by the first map client and the second map image fed back by the second map client for each piece of map query data.

6. The method of any of claims 1-5, after generating (130, 270) the at least one pair of contrast images for quality inspection based on the first map image and the second map image, further comprising:
determining (280) an image similarity between the map images in each pair of contrast images, and screening a target pair of contrast images with the image similarity lower than a preset threshold; and
sending (290) the target pair of contrast images to a quality inspection platform for quality inspection.

7. A method for assisting quality inspection of map data, executed by a first map client or a second map client, and comprising:
receiving (310) at least one piece of map query data corresponding to an area to be inspected and sent by a server;
obtaining (320) map display results by rendering pieces of map query data respectively based on adapted map data; and
performing (330) screenshot on each map display result, obtaining a map image corresponding to each piece of map query data, and sending each map image to the server;
wherein the first map client is adapted with map data to be online, and the second map client is adapted with online map data.

8. An apparatus (400) for assisting quality inspection of map data, provided in a server, and comprising:
a first obtaining module (410), configured to obtain at least one piece of map query data matching an area to be inspected;
a second obtaining module (420), configured to obtain a first map image matching each piece of map query data by a first map client and obtain a second map image matching each piece of map query data by a second map client, the first map client being adapted with map data to be online, and the second map client being adapted with online map data; and
a generating module (430), configured to generate at least one pair of contrast images for quality inspection based on the first map image and the second map image, wherein each pair of contrast images comprises map images determined by the first map client and the second map client for the same map query data.

9. The apparatus of claim 8, further comprising:
an information receiving module, configured to receive the area to be inspected and map display setting information matching the area to be inspected through a man-machine interaction interface before the at least one piece of map query data matching the area to be inspected is obtained.

10. The apparatus of claim 9, wherein the first obtaining module (410) comprises:
a first obtaining unit, configured to obtain area boundary information corresponding to the area to be inspected;
a second obtaining unit, configured to generate global query data corresponding to the area to be inspected based on the area boundary information and the map display setting information; and
a third obtaining unit, configured to obtain the at least one piece of map query data matching the area to be inspected by splitting the global query data of the area to be inspected;
or, wherein the third obtaining unit comprises:
an obtaining sub-unit, configured to obtain single-screen display areas of the first map client and the second map client based on the map display setting information; and
a splitting sub-unit, configured to split the global map query data based on sizes of the single-screen display areas and the area to be inspected.;
or, wherein the second obtaining module (420) comprises:
a fourth obtaining unit, configured to, in response to an inquiry request, obtain respective pieces of map query data corresponding to the area to be inspected, and to send the map inquiry data to the first map client and the second map client; and
a fifth obtaining unit, configured to obtain the first map image fed back by the first map client and the second map image fed back by the second map client for each piece of map query data.

11. The apparatus of any of claims 8-10, further comprising:
a screening module, configured to determine an image similarity between the map images in each pair of contrast images, and to screen a target pair of contrast images with the image similarity lower than a preset threshold after generating the at least one pair of contrast images for quality inspection based on the first map image and the second map image; and
a sending module, configured to send the target pair of contrast images to a quality inspection platform for quality inspection.

12. An apparatus (500) for assisting quality inspection of map data, provided in a first map client or a second map client, and comprising:
a receiving module (510), configured to receive at least one piece of map query data corresponding to an area to be inspected and sent by a server;
a third obtaining module (520), configured to obtain map display results by rendering pieces of map query data respectively based on adapted map data; and
a fourth obtaining module (530), configured to perform screenshot on each map display result, obtain a map image corresponding to each piece of map query data, and send each map image to the server;
wherein the first map client is adapted with map data to be online, and the second map client is adapted with online map data.

13. An electronic device, comprising:
at least one processor (610); and
a memory (620), communicatively coupled to the at least one processor (610),
wherein the memory (620) is configured to store instructions executable by the at least one processor (610), and the at least one processor (610) is caused to execute the method according to any one of claims 1 to 6, or the method according to claim 7 when the instructions are executed by the at least one processor (610).

14. A non-transitory computer readable storage medium having computer instructions stored thereon, wherein the computer instructions are configured to cause a computer to execute the method according to any one of claims 1 to 6, or the method according to claim 7.

15. A computer program product containing computer instructions, wherein when the computer instructions are executed, the instructions are caused to implement the method according to any one of claims 1 to 6, or the method according to claim 7.
